# EUROPÄISCHE PATENTSCHRIFT

(11) **EP 1 660 547 B1**
(45) Veröffentlichungstag und Bekanntmachung des Hinweises auf die Patenterteilung: **21.03.2007**
(21) Anmeldenummer: 04763245.0
(22) Anmeldetag: 15.07.2004
(51) Int. Cl.: C08F 220/00, C08F 8/36, C08F 8/32, C11D 3/34

(54) **SULFONSÄUREGRUPPEN- UND CARBOXYLGRUPPENHALTIGE COPOLYMERE**
COPOLYMERS CONTAINING SULFONIC ACID GROUPS AND CARBOXYL GROUPS
COPOLYMERES CONTENANT DES GROUPES ACIDE SULFONIQUE ET DES GROUPES CARBOXYLE

(30) Priorität: 25.08.2003 DE 10339332
(43) Veröffentlichungstag der Anmeldung: 31.05.2006
(73) Patentinhaber: BASF Aktiengesellschaft, 67056 Ludwigshafen (DE)
(72) Erfinder: GUZMANN, Marcus, 69242 Mühlhausen (DE); BECKER, Heike, 68163 Mannheim (DE); MICHL, Kathrin, 67063 Ludwigshafen (DE); KINGMA, Arend, Jouke, 67069 Ludwigshafen (DE); NIED, Stefan, 67435 Neustadt/Wstr. (DE)
(86) Internationale Anmeldenummer: PCT/EP2004/007863
(87) Internationale Veröffentlichungsnummer: WO 2005/028527

(56) Entgegenhaltungen:
- US-A- 4 604 431

## Beschreibung

Die vorliegende Erfindung betrifft Copolymere von
(A1) 70 bis 100 mol-% mindestens zweier verschiedener monoethylenisch ungesättigter Carbonsäuremonomere und
(A2) 0 bis 30 mol-% eines oder mehrerer nichtionischer Monomere
   die mit
(B) 5 bis 30 mol-%, bezogen auf die im Copolymer aus den Monomeren (A1) und gewünschtenfalls (A2) enthaltenen amidierbaren funktionellen Gruppen, einer Amino-C₁-C₂-alkansulfonsäure und/oder eines Salzes davon
umgesetzt worden sind.

Weiterhin betrifft die Erfindung die Herstellung dieser Copolymere und ihre Verwendung als Zusatz zu Wasch-, Reinigungs- und Klarspülmitteln sowie Wasch-, Reinigungs- und Klarspülmittel, die diese Copolymere enthalten.

Bei der maschinellen Geschirrspülreinigung soll das Spülgut in rückstandsfrei gereinigtem Zustand mit makellos glänzender Oberfläche anfallen. Das Spülgut soll dabei nicht nur völlig von Speiseresten gereinigt sein sondern soll auch keine weißlichen Flecken aufweisen, die aufgrund der Anwesenheit von Kalk oder anderen anorganischen und organischen Salzen bei der Eintrocknung von Wassertropfen entstehen.

Aus diesem Grund setzt man schon seit längerem Klarspüler ein. Der Klarspüler wird dabei im Klarspülgang nach Durchlaufen des üblicherweise aus einem Vorspülgang und einem von Zwischenspülgängen unterbrochenen Hauptspülgang bestehenden Reinigungsprogramms automatisch aus einem Dosiertank in den Innenraum der Geschirrspülmaschine abgegeben und sorgt dafür, daß das Wasser während Klarspül-und Trocknungsgang flächig und möglichst vollständig vom Spülgut abfließt.

Bei den im Markt eingeführten sogenannten 2in1-Geschirreinigern sind Klarspültenside bereits in die Reinigerformulierung integriert. Das Befüllen des Klarspüler-Dosiertanks ist bei Verwendung dieser Produkte nicht mehr erforderlich.

In modernen maschinellen Geschirreinigem, den 3in1-Reinigem, sind die drei Funktionen des Reinigens, des Klarspülens und der Wasserenthärtung in einer einzigen Reinigerformulierung vereint, so daß für den Verbraucher sowohl das Nachfüllen von Salz (bei Wasserhärten von 1 bis 3) als auch von Klarspülmittel überflüssig wird. Zur Bindung der härtebildenden Calcium- und Magnesiumionen im Hauptspülgang wird diesen Reinigem üblicherweise Natrium- oder Kaliumtripolyphosphat zugesetzt. Doch aus dem Zusatz dieser Phosphate resultieren gerade im Klarspülgang, wenn ihre Konzentration reduziert ist, Calcium- und Magnesiumphosphatbeläge auf dem Spülgut.

In der WO-A-01/96514 werden Belagsinhibitoren auf der Basis von Copolymeren aus olefinisch ungesättigten carboxylgruppenhaltigen Monomeren und copolymerisierbaren sulfonierten und/oder copolymerisierbaren nichtionischen Monomeren beschrieben, die zumindest teilweise im vorletzten Spülgang des Geschirrspülcyclus freigesetzt werden. Copolymere, die neben Acrylsäure auch Methacrylsäure enthalten, werden jedoch weder explizit offenbart noch als bevorzugt hervorgehoben. Zudem werden alle Copolymere durch Copolymerisation entsprechend funktionalisierter Monomere, also z.B. von Acrylsäure und 2-Acrylamido-2-methylpropansulfonsäure, hergestellt. Diese Copolymere sind auch aus der EP-A-851 022 als Calciumphosphatbeläge inhibierende Zusätze zu Klarspülern bekannt.

Gemäß der EP-A-877 002 eignen sich durch Copolymerisation stark saurer und schwach saurer Säuremonomere erhaltene Copolymere zur Inhibierung von (Poly)-Phosphatbelägen in wäßrigen Systemen. Explizit offenbart werden wiederum nur Copolymere aus Acrylsäure und 2-Acrylamido-2-propansulfonsäure.

Weiterhin ist aus der US-A-4 801 388 die Verwendung von durch Copolymerisation von (Meth)Acrylsäure mit (Meth)Acrylamidoalkansulfonsäuren hergestellten Copolymeren als Inhibitoren von Phosphatbelägen bekannt. Die explizit offenbarten Copolymere enthalten jedoch kein Methacrylmonomer. Bevorzugt sind Terpolymere, die zusätzlich Acrylamid einpolymerisiert enthalten.

In den WO-A-02/04583 und 03/06594 werden 2in1- und 3in1-Geschirrspülmittel beschrieben, die durch Copolymerisation von ungesättigten Carbonsäuren mit sulfonsäuregruppenhaltigen Monomeren erhaltene Copolymere in Kombination mit größeren Mengen von nichtionischen Tensiden und/oder Polycarbonsäuren zur fleckenfreien Trocknung des Spülguts enthalten. Für bevorzugte Copolymere sind als Monomere Acrylsäure, Methacrylsäure und Maleinsäure sowie u.a. 1-(Meth)Acrylamido-1-propan-sulfonsäure und 2-(Meth)Acrylamido-2-propansulfonsäure genannt. Diese Copolymere können gemäß WO-A-02/26926 auch in Wasch- und Reinigungsmitteltabletten mit hohem Gehalt an nichtionischen Tensiden eingesetzt werden.

Schließlich ist aus der US-A-4 604 431 die polymeranaloge Reaktion von Polyacrylsäure oder Polymethacrylsäure mit Aminoalkansulfonsäuren zur teilweisen Überführung der Carboxylgruppen in Amidoalkylsulfonsäuregruppen bekannt. Explizit offenbart wird die Umsetzung von Polyacrylsäure mit Aminoethansulfonsäure (Taurin).

Der Erfindung lag die Aufgabe zugrunde, Additive bereitzustellen, die sich durch vorteilhafte Anwendungseigenschaften, insbesondere durch ihre belagsinhibierende Wirkung und breite Einsetzbarkeit im Bereich der maschinellen Geschirreinigung, auszeichnen.

Demgemäß wurden Copolymere von
(A1) 70 bis 100 mol-% mindestens zweier verschiedener monoethylenisch ungesättigter Carbonsäuremonomere und
(A2) 0 bis 30 mol-% eines oder mehrerer nichtionischer Monomere,
   gefunden, die mit
(B) 5 bis 30 mol-%, bezogen auf die im Copolymer aus den Monomeren (A1) und gewünschtenfalls (A2) enthaltenen amidierbaren funktionellen Gruppen, einer Amino-C₁-C₂-alkansulfonsäure und/oder eines Salzes davon
umgesetzt worden sind.

Die erfindungsgemäßen Copolymere werden durch polymeranaloge Reaktion hergestellt, d.h., zunächst werden die Carbonsäuremonomere (A1) und gewünschtenfalls die nichtionischen Monomere (A2) copolymerisiert und erst das erhaltene Copolymer wird zum sulfoalkylamidgruppenhaltigen Copolymer umgesetzt. Sie unterscheiden sich von Copolymeren, die durch Polymerisation von Carbonsäure- und Carbonsäureamidoalkansulfonsäuremonomeren hergestellt worden sind, da durch die unterschiedliche Reaktivität der eingesetzten Monomere eine jeweils spezifische Anordnung der funktionellen Gruppen am Polymerrückgrat bewirkt wird.

Für die erfindungsgemäßen Copolymere bevorzugte Carbonsäuremonomere (A1) gehören der Gruppe der monoethylenisch ungesättigten C₃-C₆-Monocarbonsäuren, der monoethylenisch ungesättigten C₄-C₈-Dicarbonsäuren und ihrer Anhydride und der Salze der Mono- und Dicarbonsäuren an.

Als Beispiele für geeignete Monomere (A1) seien im einzelnen genannt: Acrylsäure, Methacrylsäure, 2-Ethylpropensäure, Crotonsäure und Vinylessigsäure sowie Itaconsäure, Maleinsäure und Maleinsäureanhydrid, wobei Acrylsäure, Methacrylsäure und Maleinsäure(anhydrid) bevorzugt und Acrylsäure und Methacrylsäure besonders bevorzugt sind.

Selbstverständlich können die Carbonsäuremonomere (A1) auch in Form ihrer Salze zum Einsatz kommen. Bevorzugt sind wasserlösliche Salze, insbesondere die Alkalimetallsalze, vor allem die Natrium- und Kaliumsalze, sowie die Ammoniumsalze, wobei die Natriumsalze besonders bevorzugt sind.

Die erfindungsgemäßen Copolymere können noch ein oder mehrere nichtionische Monomere (A2) einpolymerisiert enthalten.

Als nichtionische Comonomere (A2) seien beispielhaft aufgeführt:
- Ester von monoethylenisch ungesättigten C₃-C₆-Carbonsäuren, vor allem Acrylsäure und Methacrylsäure, mit einwertigen C₁-C₂₂-Alkoholen, insbesondere C₁-C₁₆-Alkoholen; sowie Hydroxyalkylester von monoethylenisch ungesättigten C₃-C₆-Carbonsäuren, vor allem Acrylsäure und Methacrylsäure, mit zweiwertigen C₂-C₄-Alkoholen, wie Methyl(meth)acrylat, Ethyl(meth)acrylat, n-Butyl(meth)acrylat, sec.-Butyl(meth)acrylat, tert.-Butyl(meth)acrylat, Ethylhexyl(meth)acrylat, Decyl(meth)acrylat, Lauryl(meth)acrylat, Isobornyl(meth)acrylat, Cetyl(meth)acrylat, Palmityl(meth)acrylat und Stearyl(meth)acrylat, Hydroxyethyl(meth)acrylat, Hydroxypropyl(meth)acrylat und Hydroxybutyl(meth)acrylat;
- Amide von monoethylenisch ungesättigten C₃-C₆-Carbonsäuren, vor allem Acrylsäure und Methacrylsäure, mit C₁-C₁₂-Alkylaminen und Di(C₁-C₄-alkyl)aminen, wie N-Methyl(meth)acrylamid, N,N-Dimethyl(meth)acrylamid, N-Ethyl(meth)acrylamid, N-Propyl(meth)acrylamid, N-tert.-Butyl(meth)acrylamid, N-tert.-Octyl(meth)-acrylamid und N-Undecyl(meth)acrylamid, sowie (Meth)Acrylamid;
- Vinylester von gesättigten C₂-C₃₀-Carbonsäuren, insbesondere C₂-C₁₄-Carbonsäuren, wie Vinylacetat, Vinylpropionat, Vinylbutyrat, Vinyl-2-ethylhexanoat und Vinyllaurat;
- Vinyl-C₁-C₃₀-alkylether, insbesondere Vinyl-C₁-C₁₈-alkylether, wie Vinylmethylether, Vinylethylether, Vinyl-n-propylether, Vinylisopropylether, Vinyl-n-butylether, Vinylisobutylether, Vinyl-2-ethylhexylether und Vinyloctadecylether;
- N-Vinylamide und N-Vinyllactame, wie N-Vinylformamid, N-Vinyl-N-methylformamid, N-Vinylacetamid, N-Vinyl-N-methylacetamid, N-Vinylpyrrolidon, N-Vinylpiperidon und N-Vinylcaprolactam;
- aliphatische und aromatische Olefine, wie Ethylen, Propylen, C₄-C₂₄-α-Olefine, insbesondere C₄-C₁₆-α-Olefine, z.B. Butylen, Isobutylen, Diisobuten, Styrol und α-Methylstyrol, sowie auch Diolefine mit einer aktiven Doppelbindung, z.B. Butadien;
- ungesättigte Nitrile, wie Acrylnitril und Methacrylnitril.

Sind die Monomere (A2) in den erfindungsgemäßen Copolymeren enthalten, so beträgt ihr Gehalt üblicherweise 0,5 bis 30 mol-%, vorzugsweise 1 bis 10 mol-%, bezogen auf das Copolymer aus (A1) und (A2).

Bevorzugt basieren die erfindungsgemäßen Copolymere jedoch auf einem nur aus den Monomeren (A1) und besonders bevorzugt nur aus Methacrylsäure, Acrylsäure und/oder Maleinsäure aufgebauten Copolymer.

Ganz besonders bevorzugt sind Copolymere von Methacrylsäure und Acrylsäure. In der Regel beträgt das Molverhältnis Methacrylsäure und Acrylsäure dabei 10 : 1 bis 1 : 5, insbesondere 9 : 1 bis 1 : 3, vor allem 9: 1 bis 1 : 2.

Die erfindungsgemäßen Copolymere von Monomeren (A1) und gewünschtenfalls Monomeren (A2) sind mit einer Amino-C₁-C₂-alkansulfonsäure und/oder einem Salz dieser Säure (B) umgesetzt, wodurch ein Teil der im Copolymer enthaltenen amidierbaren funktionellen Gruppen in die entsprechenden N-Sulfoalkylamidgruppen überführt worden ist. Dabei handelt es sich insbesondere um die Carboxylgruppen der Monomere (A1). Enthalten die Copolymere auch nichtionische Monomere (A2) mit Ester- oder Amidgruppen, so können auch diese amidiert bzw. umamidiert werden.

Geeignete Amino-C₁-C₂-alkansulfonsäuren (B) sind Aminomethansulfonsäure und 2-Aminoethansulfonsäure, wobei 2-Aminoethansulfonsäure bevorzugt ist.

Die Aminoalkansulfonsäuren (B) können in freier Form oder als Salze eingesetzt werden. Als Salze sind wiederum die Alkalimetallsalze, insbesondere die Natriumsalze, bevorzugt. Selbstverständlich können auch Mischungen von 2-Aminoethansulfonsäure und Aminomethansulfonsäure verwendet werden.

Erfindungsgemäß sind die Copolymere aus den Monomeren (A1) und gewünschtenfalls (A2) mit 5 bis 30 mol-%, bevorzugt mit 6 bis 17 mol-%, besonders bevorzugt mit 7 bis 14 mol-%, Aminoalkansulfonsäure, jeweils bezogen auf die im Copolymer aus (A1) und gewünschtenfalls (A2) enthaltenen amidierbaren funktionellen Gruppen, umgesetzt.

Dementsprechend weisen die erfindungsgemäßen Copolymere eine Zusammensetzung von 65 bis 97 mol-%, insbesondere 73 bis 97 mol%, vor allem 80 bis 95 mol-%, der Monomere (A1) und gewünschtenfalls (A2) und 3 bis 35 mol-%, insbesondere 3 bis 27 mol-%, vor allem 5 bis 20 mol-%, der Aminoalkansulfonsäure (B) auf.

Die erfindungsgemäßen Copolymere haben in der Regel ein mittleres Molekulargewicht M_{w} von 3 000 bis 50 000, bevorzugt von 10 000 bis 35 000 und besonders bevorzugt von 15 000 bis 25 000 (bestimmt durch Gelpermeationschromatographie bei Raumtemperatur mit wäßrigem Elutionsmittel).

Der K-Wert der Copolymere liegt üblicherweise bei 12 bis 40, insbesondere bei 15 bis 32, vor allem bei 18 bis 30 (gemessen in 1 gew.-%iger wäßriger Lösung bei einem pH-Wert von 7,2 und 25°C, nach H. Fikentscher, Cellulose-Chemie, Bd. 13, S. 58-64 und 71-74 (1932)).

Die erfindungsgemäßen Copolymere sind vorteilhaft nach dem ebenfalls erfindungsgemäßen Verfahren herstellbar, welches dadurch gekennzeichnet ist, daß man
a) mindestens zwei der Monomere (A1) und gewünschtenfalls ein oder mehrere der Monomere (A2) radikalisch miteinander copolymerisiert und
b) das in Schritt a) erhaltene Copolymer mit einer Amino-C₁-C₂-alkansulfonsäure und/oder einem Salz dieser Säure umsetzt.

In Schritt a) kann dabei nach allen bekannten radikalischen Polymerisationsverfahren gearbeitet werden. Neben der Polymerisation in Substanz sind insbesondere die Verfahren der Lösungspolymerisation und der Emulsionspolymerisation zu nennen, wobei die Lösungspolymerisation bevorzugt ist.

Die Polymerisation wird vorzugsweise in Wasser als Lösungsmittel durchgeführt. Sie kann jedoch auch in alkoholischen Lösungsmitteln, insbesondere C₁-C₄-Alkoholen, wie Methanol, Ethanol und vorzugsweise Isopropanol, oder Mischungen dieser Lösungsmittel mit Wasser, vor allem Mischungen von Wasser und Isopropanol, vorgenommen werden.

Als Polymerisationsinitiatoren eignen sich sowohl thermisch als auch photochemisch (Photoinitiatoren) zerfallende und dabei Radikale bildende Verbindungen.

Unter den thermisch aktivierbaren Polymerisationsinitiatoren sind Initiatoren mit einer Zerfallstemperatur im Bereich von 20 bis 180°C, insbesondere von 50 bis 90°C, bevorzugt. Beispiele für geeignete thermische Initiatoren sind anorganische Peroxoverbindungen, wie Peroxodisulfate (Ammonium- und vorzugsweise Natriumperoxodisulfat), Peroxosulfate, Percarbonate und Wasserstoffperoxid; organische Peroxoverbindungen, wie Diacetylperoxid, Di-tert.-butylperoxid, Diamylperoxid, Dioctanoylperoxid, Didecanoylperoxid, Dilauroylperoxid, Dibenzoylperoxid, Bis(o-toloyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylpemeodecanoat, tert.-Butylperbenzoat, tert.-Butylperoxid, tert.-Butylhydroperoxid, Cumolhydroperoxid, tert.-Butylperoxi-2-ethylhexanoat und Diisopropylperoxidicarbamat; Azoverbindungen, wie 2,2'-Azobisisobutyronitril, 2,2'-Azobis(2-methylbutyronitril) und Azobis(2-amidopropan)dihydrochlorid.

Diese Initiatoren können in Kombination mit reduzierenden Verbindungen als Starter/Regler-Systeme zum Einsatz kommen. Als Beispiele für derartige reduzierende Verbindungen seien phosphorhaltige Verbindungen, wie phosphorige Säure, Hypophosphite und Phosphinate, schwefelhaltige Verbindungen, wie Natriumhydrogensulfit, Natriumsulfit und Natriumformaldehydsulfoxilat, sowie Hydrazin genannt.

Beispiele für geeignete Photoinitiatoren sind Benzophenon, Acetophenon, Benzoinether, Benzyldialkylketone und deren Derivate.

Vorzugsweise werden thermische Initiatoren eingesetzt, wobei anorganische Peroxoverbindungen, insbesondere Natriumperoxodisulfat (Natriumpersulfat) und Wasserstoffperoxid, bevorzugt sind.

Vorteilhaft kommen die Peroxoverbindungen in Kombination mit schwefelhaltigen Reduktionsmitteln, insbesondere Natriumhydrogensulfit, als Redoxinitiatorsystem zum Einsatz. Bei Verwendung dieses Starter/Regler-Systems werden Copolymere erhalten, die als Endgruppen -SO₃⁻ Na⁺ und/oder -SO₄⁻ Na⁺ enthalten und sich durch besondere Reinigungskraft und belagsinhibierende Wirkung auszeichnen können.

Alternativ können auch phosphorhaltige Starter/Regler-Systeme verwendet werden, z.B. Hypophosphite/Phosphinate.

Die Mengen Photoinitiator bzw. Starter/Regler-System sind auf die jeweils verwendeten Monomere abzustimmen. Wird beispielsweise das bevorzugte System Peroxodisulfat/Hydrogensulfit verwendet, so werden üblicherweise 2 bis 6 Gew.-%, vorzugsweise 3 bis 5 Gew.-%, Peroxodisulfat und in der Regel 5 bis 30 Gew.-%, vorzugsweise 5 bis 10 Gew.-%, Hydrogensulfit, jeweils bezogen auf die Summe der Monomere, eingesetzt.

Gewünschtenfalls können auch Polymerisationsregler zum Einsatz kommen. Geeignet sind die dem Fachmann bekannten Verbindungen, z.B. Schwefelverbindungen, wie Mercaptoethanol, 2-Ethylhexylthioglykolat, Thioglykolsäure und Dodecylmercaptan.

Wenn Polymerisationsregler verwendet werden, beträgt ihre Einsatzmenge in der Regel 0,1 bis 15 Gew.%, bevorzugt 0,1 bis 5 Gew.-% und besonders bevorzugt 0,1 bis 2,5 Gew.-%, bezogen auf die Summe der Monomere.

Die Polymerisationstemperatur liegt in der Regel bei 30 bis 200°C, bevorzugt bei 50 bis 150°C und besonders bevorzugt bei 80 bis 130°C.

Die Polymerisation wird vorzugsweise unter Schutzgas, wie Stickstoff oder Argon, vorgenommen und kann unter atmosphärischem Druck durchgeführt werden, bevorzugt wird sie jedoch in geschlossenem System unter dem sich entwickelnden Eigendruck vorgenommen.

Das erfindungsgemäße Copolymer wird in Schritt a) vorzugsweise in Form einer Polymerlösung erhalten, die einen Feststoffgehalt von üblicherweise 10 bis 70 Gew.-% aufweist.

In Schritt b) wird das in Schritt a) erhaltene Copolymer, bevorzugt in Form der anfallenden Lösung, in einer polymeranalogen Reaktion mit (B) der Aminoalkansulfonsäure und/oder einem Salz dieser Säure umgesetzt, wodurch ein Teil der im Copolymer enthaltenen amidierbaren funktionellen Gruppen in die entsprechenden N-Sulfoalkylamidgruppen überführt wird.

Zweckmäßigerweise wird die Copolymerlösung zunächst durch Zugabe einer Base auf einen pH-Wert von vorzugsweise 2,0 bis 9,0, insbesondere 4,0 bis 7,5, vor allem 4,5 bis 7, eingestellt. Hierfür eignen sich prinzipiell alle organischen und anorganischen Basen, bevorzugt werden jedoch wäßrige Lösungen von Alkalimetallhydroxiden, z.B. Natronlauge, eingesetzt.

Die Einsatzmenge an Aminoalkansulfonsäure wird dabei so gewählt, daß das Molverhältnis von im Copolymer enthaltenen amidierbaren funktionellen Gruppen zu Aminoalkansulfonsäure bei in der Regel 19 : 1 bis 2 : 1, bevorzugt 15 : 1 bis 5 : 1 und besonders bevorzugt 13 : 1 bis 6 : 1 liegt.

Die Amidierungstemperatur beträgt in der Regel 140 bis 250°C, bevorzugt 165 bis 200°C und besonders bevorzugt 165 bis 200°C.

Die Amidierung wird ebenfalls zweckmäßigerweise unter Schutzgas, wie Stickstoff oder Argon, durchgeführt, wobei unter Normaldruck oder vorzugsweise jedoch unter dem sich in geschlossenem System entwickelnden Eigendruck gearbeitet wird (Druck von im allgemeinen 1 bis 25 bar, insbesondere 5 bis 17 bar, vor allem 7 bis 13 bar).

Wenn für die Anwendung gewünscht, können die bei der Herstellung der erfindungsgemäßen Copolymere vorzugsweise anfallenden wäßrigen Lösungen durch Zugabe von organischen oder insbesondere anorganischen Basen, insbesondere von Natronlauge, neutralisiert oder teilneutralisiert, d.h. auf einen pH-Wert im Bereich von 4 bis 8, vorzugsweise von 4,5 bis 7,5, eingestellt, werden.

Die erfindungsgemäßen Copolymere eignen sich hervorragend als Zusatz in Wasch-, Reinigungs- und Klarspülmitteln.

Besonders vorteilhaft können sie in Reinigungs- und Klarspülmitteln für maschinelle Geschirrspüler eingesetzt werden. Sie zeichnen sich dabei vor allem durch ihre belagsinhibierende Wirkung sowohl gegenüber anorganischen als auch organischen Belägen aus, so daß sie sich sowohl für den Einsatz in den getrennt dosierten Klarspülern als auch für den Einsatz in die Klarspülfunktion miterfüllenden 2in1- und 3in1-Geschirreinigem eignen.

Ihre Einsatzmengen liegen üblicherweise bei 0,1 bis 20 Gew.-%, vorzugsweise 1 bis 10 Gew.-%, in Reinigertabletten und Reinigerpulvern und in der Regel bei 0,1 bis 10 Gew.-%, bevorzugt 1 bis 6 Gew.-% in Klarspülern, jeweils bezogen auf die Reiniger- bzw. Klarspülerformulierung.

Die erfindungsgemäßen Copolymere wirken inhibierend sowohl für Beläge, die durch die Bestandteile der Reinigerformulierung, die die Wasserhärte erniedrigen sollen, hervorgerufen werden, wie Beläge von Calcium- und Magnesiumphosphat, Calcium- und Magnesiumsilikat und Calcium- und Magnesiumphosphonat, als auch für Beläge, die aus den Schmutzbestandteilen der Spülflotte stammen, wie Fett-, Eiweiß- und Stärkebeläge. Die erfindungsgemäß verwendeten Copolymere verbessern durch ihre belagsinhibierende Wirkung das Reinigungsergebnis nachhaltig. Zusätzlich begünstigen sie bereits in geringen Konzentrationen das Ablaufen des Wassers vom Spülgut, so daß der Anteil an Klarspültensiden im Geschirrspülmittel reduziert werden kann. Bei Anwendung der beanspruchten Copolymere werden dementsprechend besonders klare Gläser und hochglänzende Metallbesteckteile erhalten, insbesondere auch dann, wenn der Geschirrspüler ohne Regeneriersalz zur Wasserenthärtung betrieben wird.

Die erfindungsgemäßen Copolymere können direkt in Form der bei der Herstellung anfallenden wäßrigen Lösungen als auch in getrockneter, z.B. durch Sprühtrocknung, Fluidized Spray Drying, Walzentrocknung oder Gefriertrocknung erhaltener Form eingesetzt werden.

Die erfindungsgemäßen Copolymere können beispielsweise folgendermaßen zur Anwendung kommen:
- Gelöst in einer Klarspülformulierung, die in der Geschirrspülmaschine zu Beginn des Klarspülgangs automatisch dosiert wird.
- Als nach einem der oben beschriebenen Verfahren erhaltener Feststoff, der zusätzlich mit einer unter den Klarspülbedingungen (Temperatur, pH-Wert, Restkonzentration an Reinigungsmittelkomponenten im Klarspülgang) löslichen Beschichtung versehen ist oder in eine unter diesen Bedingungen löslichen Matrix eingebaut ist und mit dem Reinigungsmittel in die Maschine eingebracht wird, jedoch erst im Klarspülgang freigesetzt wird.
   Als Beschichtungsmaterial eignet sich hierfür z.B. durch unvollständige Hydrolyse von Polyvinylacetat hergestellter Polyvinylalkohol (Hydrolysegrad von in der Regel 88 bis 98%, bevorzugt 89 bis 95%, besonders bevorzugt 91 bis 92%).
   Als Matrixmaterial sind beispielsweise Gelatine, Polyvinylalkohol, Polyvinylpyrrolidon, Polyethylenoxid, Cellulose und deren Derivate, Stärke und deren Derivate und Mischungen dieser Materialien geeignet.
- Formuliert in den Klarspülkern einer Geschirrspülmitteltablette, aus dem sie gezielt im Klarspülgang freigesetzt werden.

### Beispiele

### I) Herstellung von erfindungsgemäßen Copolymeren

### Beispiel 1

### a) Copolymerisation

In einem Reaktor mit Rührer, Stickstoffzufuhr, Rückflußkühler und Dosiervorrichtung wurden 324 g Wasser unter Stickstoff auf 100°C Innentemperatur erhitzt. Dann wurden ein Gemisch aus 107 g Acrylsäure und 242 g Methacrylsäure in 230 g Wasser und parallel dazu eine Lösung von 14 g Natriumperoxodisulfat in 78 g Wasser kontinuierlich in 4 h zudosiert. Nach einstündigem Nachrühren bei 100°C wurde das Reaktionsgemisch auf Raumtemperatur abgekühlt.

Es wurde eine klare Copolymerlösung mit einem Feststoffgehalt von 35 Gew.-% erhalten. Der K-Wert des Copolymers betrug 50 (1 gew.%ig in Wasser, pH-Wert 7, 25°C).

### b) Amidierung

In einem druckstabilen Reaktionskessel mit Rührer, Stickstoffzufuhr, Temperaturfühler, Druckanzeige und Entlüftungsmöglichkeit wurde eine Mischung aus 1000 g der in Schritt a) erhaltenen und auf einen Feststoffgehalt von 25 Gew.-% verdünnten Copolymerlösung und 43,5 g 2-Aminoethansulfonsäure (Taurin) durch Zugabe von 183,0 g 50 gew.%iger Natronlauge auf einen pH-Wert von 6 eingestellt. Nach dreimaligem Spülen mit Stickstoff und Verschließen des Kessels wurde das Gemisch unter Rühren auf eine Innentemperatur von 180°C erhitzt, wobei sich ein Druck von ca. 12 bar aufbaute. Nach fünfstündigem Rühren bei 180°C wurde das Reaktionsgemisch ohne Entspannung auf Raumtemperatur abgekühlt. Der Kessel wurde dann geöffnet. Durch Zugabe von 14,0 g 50 gew.-%iger Natronlauge wurde anschließend ein pH-Wert von 7,2 eingestellt.

Es wurde eine klare gelbe Lösung mit einem Feststoffgehalt von 31,7 Gew.-% erhalten. Der K-Wert des amidierten Copolymers betrug 23,8 (1 gew.-%ig in 3 gew.-%iger wäßriger NaCl-Lösung, pH-Wert 7,2, 25°C).

### Beispiel 2

Es wurde analog Beispiel 1 vorgegangen, jedoch wurden in Schritt b) 33,4 g Taurin sowie vor der Umsetzung 173 g und nach der Umsetzung 18,9 g 50 gew.%ige Natronlauge eingesetzt.

Es wurde eine klare gelbe Lösung mit einem Feststoffgehalt von 50 Gew.-% erhalten. Der K-Wert des amidierten Copolymers betrug 24,9 (1 gew.-%ig in 3 gew.-%iger wäßriger NaCl-Lösung, pH-Wert 7,2, 25°C).

### Beispiel 3

### a) Copolymerisation

In einem Reaktor mit Rührer, Stickstoffzufuhr, Rückflußkühler und Dosiervorrichtung wurden 1016 g eines Wasser/Isopropanol-Gemisches (Gew.-Verh. 80/20) unter Stickstoff auf 100°C Innentemperatur erhitzt. Dann wurden ein Gemisch aus 472 g Acrylsäure und 1102 g Methacrylsäure in 449 g Wasser in 4 h und parallel dazu eine Lösung von 120 g Wasserstoffperoxid (30 gew.-%ig) in 200 g eines Wasser/lsopropanol-Gemisches (Gew.-Verh. 80/20) kontinuierlich in 6 h zudosiert. Mit weiteren 200 g des Wasser/lsopropanol-Gemisches wurde der Zulauf anschließend gespült. Nach einstündigem Nachrühren bei 100°C wurde das Reaktionsgemisch auf Raumtemperatur abgekühlt.

Es wurde eine klare Copolymerlösung mit einem Feststoffgehalt von 34 Gew.-% erhalten. Der K-Wert des Copolymers betrug 75,3 (1 gew.-%ig in Wasser, pH-Wert 7, 25°C).

### b) Amidierung

In einem druckstabilen Reaktionskessel mit Rührer, Stickstoffzufuhr, Temperaturfühler, Druckanzeige und Entlüftungsmöglichkeit wurde eine Mischung aus 800 g der in Schritt a) erhaltenen und mit 200 g Wasser verdünnten Copolymerlösung und 61,6 g 2-Aminoethansulfonsäure (Taurin) durch Zugabe von 207,0 g 50 gew.-%iger Natronlauge auf einen pH-Wert von 6 eingestellt. Nach dreimaligem Spülen mit Stickstoff und Verschließen des Kessels wurde das Gemisch unter Rühren auf eine Innentemperatur von 180°C erhitzt, wobei sich ein Druck von ca. 9,6 bar aufbaute. Nach fünfstündigem Rühren bei 180°C wurde das Reaktionsgemisch ohne Entspannung auf Raumtemperatur abgekühlt. Der Kessel wurde dann geöffnet. Durch Zugabe von 6,3 g 96 gew.-%iger Schwefelsäure wurde anschließend ein pH-Wert von 7,2 eingestellt.

Es wurde eine klare gelbe Lösung mit einem Feststoffgehalt von 34,9 Gew.-% erhalten. Der K-Wert des amidierten Copolymers betrug 55,7 (1 gew.-%ig in Wasser, pH-Wert 7,2, 25°C).

### II) Anwendung von erfindungsgemäßen Copolymeren in maschinellen Geschirrspülmitteln

### a) Belagsinhibierung

Zur Prüfung ihrer belagsinhibierenden Wirkung wurden die erhaltenen Copolymere zusammen mit einer Geschirrspülmittelformulierung folgender Zusammensetzung eingesetzt:

| | |
|---|---|
| 50 Gew.-% | Natriumtripolyphosphat (Na₃P₃O₁₀ · 6 H₂O) |
| 27 Gew.-% | Natriumcarbonat |
| 3 Gew.-% | Natriumdisilikat (x Na₂O · y SiO₂; x/y = 2,65; 80%ig) |
| 6 Gew.-% | Natriumpercarbonat (Na₂CO₃ · 1,5 H₂O) |
| 2 Gew.-% | Tetraacetylethylendiamin (TAED) |
| 2 Gew.-% | schaumarmes nichtionisches Tensid auf der Basis von Fettalkoholalkoxylaten |
| 3 Gew.-% | Natriumchlorid |
| 5 Gew.-% | Natriumsulfat |
| 2 Gew.-% | Polyacrylsäure-Natriumsalz (M_{w} 8 000) |

Die Prüfung erfolgte bei den folgenden Spülbedingungen ohne Zusatz von Ballastschmutz, wobei weder Klarspüler noch Regeneriersalz eingesetzt wurden:

| | |
|---|---|
| Geschirrspüler: | Miele G 686 SC |
| Spülgänge: | 2 Spülgänge 55°C Normal (ohne Vorspülen) |
| Spülgut: | Messer (WMF Tafelmesser Berlin, Monoblock) und Faßformglasbecher (Matador, Ruhr Kristall) |
| Geschirrspülmittel: | 21 g |
| Copolymer: | 4,2 g |
| Klarspültemperatur: | 65°C |
| Wasserhärte: | 25°dH |

Die Bewertung des Spülguts erfolgte 18 h nach der Reinigung durch visuelle Abmusterung in einem schwarz lackierten Leuchtkasten mit Halogenspot und Lochblende unter Verwendung einer Notenskala von 10 (sehr gut) bis 1 (sehr schlecht). Die Höchstnote 10 entspricht dabei belags- und tropfenfreien Oberflächen, ab Noten < 5 sind Beläge und Tropfen schon bei normaler Raumbeleuchtung erkennbar, werden also als störend wahrgenommen.

Die erhaltenen Prüfergebnisse sind in Tabelle 1 zusammengestellt. Zum Vergleich sind dabei die Ergebnisse aufgeführt, die bei Einsatz eines Copolymers von Acrylsäure und 2-Amino-2-methylpropansulfonsäure (Molverhältnis 80 : 20, M_{w} 20 000) (Vergleichsbeispiel V1) bzw. ohne Einsatz eines zusätzlichen Copolymers erhalten wurden.

**Tabelle 1**

| Copolymer aus Bsp. | Bewertung (Note) | |
|---|---|---|
| | Messer | Gläser |
| 1 | 8,0 | 8,3 |
| 2 | 7,0 | 8,8 |
| 3 | 8,3 | 8,2 |
| V1 | 7,3 | 8,3 |
| - | 4,0 | 6,0 |

### b) Klarspülwirkung

Zur Prüfung ihrer Klarspülwirkung wurden die erhaltenen Copolymere zusammen mit einer handelsüblichen 3in1-Geschirrspülformulierung in Tablettenform (Somat) eingesetzt, wobei die Copolymere erst im Klarspülgang zugesetzt wurden, um eine verzögerte Freigabe von weiterem Copolymer zu simulieren.

Die Prüfung wurde jedoch in Gegenwart von IKW-Ballastschmutz (SÖFW-Journal, 124. Jahrgang, 14/98, S. 1029) unter folgenden Spülbedingungen vorgenommen:

| | |
|---|---|
| Geschirrspüler: | Miele G 686 SC |
| Spülgänge: | 1 Spülgang, 55°C |
| Spülgut: | Messer (WMF Tafelmesser Berlin, Monoblock); Gläser (Willy, 0,3 l); schwarze Dessertteller (Keramik); schwarze Kunststoffteller (SAN); EMSA Superline - Box (Deckel PE blau, Dose PP transparent) |
| Geschirrspülmittel: | 1 Tablette Somat 3in1 |
| Ballastschmutz: | Zugabe 50 g im Hauptspülgang, 2 g im Klarspülgang |
| Copolymer: | 210 mg im Klarspülgang |
| Klarspültemperatur: | 65°C |
| Wasserhärte: | 21 °dH |

Nach Ende des Spülgangs wurde die Tür geöffnet und das Geschirr bei geöffneter Maschinentür 60 min trocknen gelassen. Die Bewertung des Spülguts erfolgte im Anschluß daran durch visuelle Abmusterung in dem unter a) beschriebenen Leuchtkasten unter Verwendung einer Notenskala von 0 (sehr schlecht; sehr starke Bildung von getrockneten Tropfen (Spotting), d.h. mehr als 50% der Oberfläche mit getrockneten Tropfen belegt, starke Bildung von flächigen Belägen (Filming)) bis 4 (sehr gut, keine Spots, kein Filming).

Die erhaltenen Prüfergebnisse sind in Tabelle 2 zusammengestellt, wobei wiederum zum Vergleich die Ergebnisse mit Copolymer V1 und ohne Zusatz von Copolymer aufgeführt sind.

**Tabelle 2**

| Copolymer aus Bsp. | Bewertung (Note) | | |
|---|---|---|---|
| | Messer, Gläser, Keramikteller | | Kunststoffteile |
| | Spotting | Filming | Spotting |
| 1 | 2,2 | 2,9 | 1,2 |
| 2 | 1,8 | 3,2 | 1,2 |
| V1 | 1,7 | 2,9 | 1,1 |
| - | 1,8 | 2,0 | 0,8 |

## Patentansprüche

1. Copolymere von
(A1) 70 bis 100 mol-% mindestens zweier verschiedener monoethylenisch ungesättigter Carbonsäuremonomere und
(A2) 0 bis 30 mol-% eines oder mehrerer nichtionischer Monomere,
die mit
(B) 5 bis 30 mol-%, bezogen auf die im Copolymer aus den Monomeren (A1) und gewünschtenfalls (A2) enthaltenen amidierbaren funktionellen Gruppen, einer Amino-C₁-C₂-alkansulfonsäure und/oder eines Salzes davon
umgesetzt worden sind.

2. Copolymere nach Anspruch 1, die als Komponente (A1) mindestens zwei Monomere aus der Gruppe der monoethylenisch ungesättigten C₃-C₆-Monocarbonsäuren, der monoethylenisch ungesättigten C₄-C₈-Dicarbonsäuren und ihrer Anhydride und der Salze dieser Säuren einpolymerisiert enthalten.

3. Copolymere nach Anspruch 1 oder 2, die nur aus den Monomeren (A1) aufgebaut sind.

4. Copolymere nach den Ansprüchen 1 bis 3, die als Monomere (A1) Methacrylsäure, Acrylsäure und/oder Maleinsäure einpolymerisiert enthalten.

5. Copolymere nach den Ansprüchen 1 bis 4, die als Monomere (A1) Methacrylsäure und Acrylsäure im Molverhältnis 9 : 1 bis 1 : 2 einpolymerisiert enthalten.

6. Copolymere nach den Ansprüchen 1 bis 5, bei denen als Komponente (B) 2-Aminoethansulfonsäure und/oder ein Salz dieser Säure eingesetzt worden ist.

7. Verfahren zur Herstellung von Copolymeren gemäß den Ansprüchen 1 bis 6, **dadurch gekennzeichnet, daß** man
a) mindestens zwei der Monomere (A1) und gewünschtenfalls ein oder mehrere der nichtionischen Monomere (A2) radikalisch miteinander copolymerisiert und
b) das in Schritt a) erhaltene Copolymer mit einer Amino-C₁-C₂-alkansulfonsäure und/oder einem Salz dieser Säure umsetzt.

8. Verwendung von Copolymeren gemäß den Ansprüchen 1 bis 6 als Zusatz zu Wasch-, Reinigungs- und Klarspülmitteln.

9. Verwendung von Copolymeren gemäß den Ansprüchen 1 bis 6 als belagsinhibierender Zusatz zu Reinigungs- und Klarspülmitteln für maschinelle Geschirrspüler.

10. Wasch-, Reinigungs- und Klarspülmittel, die Copolymere gemäß den Ansprüchen 1 bis 6 als Zusatz enthalten.

## Claims

1. A copolymer of
(A1) 70 to 100 mol% of at least two different monoethylenically unsaturated carboxylic acid monomers and
(A2) 0 to 30 mol% of one or more nonionic monomers,
which have been reacted with
(B) 5 to 30 mol%, based on the amidatable functional groups present in the copolymer of the monomers (A1) and if desired (A2), of an amino-C₁-C₂-alkanesulfonic acid and/or a salt thereof.

2. The copolymer according to claim 1, which comprises, in copolymerized form, as component (A1), at least two monomers from the group of monoethylenically unsaturated C₃-C₆-monocarboxylic acids, of monoethylenically unsaturated C₄-C₈-dicarboxylic acids and their anhydrides and the salts of these acids.

3. The copolymer according to claim 1 or 2 which is made up only of the monomers (A1).

4. The copolymer according to claims 1 to 3, which comprises, in copolymerized form, as monomer (A1), methacrylic acid, acrylic acid and/or maleic acid.

5. The copolymer according to claims 1 to 4, which comprises, in copolymerized form, as monomer (A1), methacrylic acid and acrylic acid in the molar ratio 9:1 to 1:2.

6. The copolymer according to claims 1 to 5, in which 2-aminoethanesulfonic acid and/or a salt of this acid has been used as component (B).

7. A process for the preparation of copolymers according to claims 1 to 6, which comprises
a) copolymerizing at least two of the monomers (A1) and, if desired, one or more of the nonionic monomers (A2) free-radically with one another and
b) reacting the copolymer obtained in step a) with an amino-C₁-C₂-alkanesulfonic acid and/or a salt of this acid.

8. The use of copolymers according to claims 1 to 6 as additive in detergents, cleaners and rinse aids.

9. The use of copolymers according to claims 1 to 6 as film-inhibiting additive for detergents and rinse aids for dishwashers.

10. A detergent, cleaner or rinse aid which comprises copolymers according to claims 1 to 6 as additive.

## Revendications

1. Copolymères de
(A1) 70 à 100% en mole d'au moins deux monomères d'acide carboxylique monoéthyléniquement insaturés différents et
(A2) 0 à 30% en mole d'un ou plusieurs monomères non-ioniques,
qui ont été mis en réaction avec
(B) 5 à 30% en mole, par rapport aux groupes fonctionnels amidables contenus dans le copolymère à partir des monomères (A1) et, éventuellement, (A2), d'un acide amino-C₁-C₂-alcanesulfonique et/ou d'un de ses sels.

2. Copolymères selon la revendication 1, qui contiennent sous forme polymérisée, comme composant (A1), au moins deux monomères du groupe des acides C₃-C₆-monocarboxyliques monoéthyléniquement insaturés, des acides C₄-C₆-dicarboxyliques monoéthyléniquement insaturés et de leurs anhydrides et des sels de ces acides.

3. Copolymères selon l'une des revendications 1 ou 2 qui sont composés des monomères (A1).

4. Copolymères selon l'une des revendications 1 à 3, qui contiennent comme monomères (A1) sous forme polymérisée de l'acide méthacrylique, de l'acide acrylique et/ou de l'acide maléique.

5. Copolymères selon l'une des revendications 1 à 4, qui contiennent comme monomères (A1) sous forme polymérisée de l'acide méthacrylique et de l'acide acrylique dans un rapport molaire de 9:1 à 1:2.

6. Copolymères selon l'une des revendications 1 à 5, dans lesquels l'acide aminoéthanesulfonique et/ou un sel de cet acide a été utilisé comme composant (B).

7. Procédé de préparation de copolymères conformément aux revendications 1 à 6, **caractérisé en ce que**
a) au moins deux des monomères (A1) et, si souhaité, un ou plusieurs des monomères (A2) non-ioniques sont copolymérisés l'un avec l'autre sous forme radicalaire et
b) le copolymère obtenu dans l'étape a) est mis en réaction avec un acide amino-C₁-C₂-alcanesulfonique et/ou un sel de cet acide.

8. Utilisation de copolymères selon l'une des revendications 1 à 6, comme additif à des agents de lavage, de nettoyage et de rinçage.

9. Utilisation de copolymères selon l'une des revendications 1 à 6, comme additif inhibiteur de dépôt pour des agents de nettoyage et de rinçage destinés à des lave-vaisselle.

10. Agents de lavage, de nettoyage et de rinçage qui contiennent des copolymères selon l'une des revendications 1 à 6.
